Europäisches Patentamt

**European Patent Office**

**Office européen des brevets**

(19)

(11) Veröffentlichungsnummer: **0 175 329**
**B1**

(12) # EUROPÄISCHE PATENTSCHRIFT

(45) Veröffentlichungstag der Patentschrifft:
21.03.90

(21) Anmeldenummer: 85111694.7

(22) Anmeldetag: 16.09.85

(51) Int. Cl. 5: **C 04 B 35/18, C 04 B 35/80**

(54) **Keramischer Formkörper.**

(30) Priorität: 17.09.84 DE 3434077
14.12.84 DE 3445765

(43) Veröffentlichungstag der Anmeldung:
26.03.86 Patentblatt 86/13

(45) Bekanntmachung des Hinweises auf die Patenterteilung:
21.03.90 Patentblatt 90/12

(84) Bennante Vertragsstaaten:
BE DE FR GB IT SE

(56) Entgegenhaltungen:
EP-A-0 027 825
WO-A-84/02880
WO-A-85/00803
DE-A-2 631 875
CERAMIC ENGINEERING AND SCIENCE
PROCEEDINGS, Band 5, Nr. 5/6, Mai-Juni 1984, Seiten
385-396; A.E. PASTO: "Silicon Nitride-Cordierite
Composites for Diesel Engine Applications"

CERAMIC ENGINEERING AND SCIENCE
PROCEEDINGS, Band 5, Nr. 7/8, Juli-August 1984,
Seiten 513-529; B.A. BENDER et al.: "Electron
Microscopy of Ceramic Fiber-Ceramic Matrix Compo-
sites-Comparison with Processing and Behavior"

AMERICAN CERAMIC SOCIETY BULLETIN, Band 63,
Nr. 5, Mai 1984, Seiten 705-710; B.H. MUSSLER et al.:
"Preparation and Properties of Mullite-Cordierite
Composites"

(73) Patentinhaber: **Schott Glaswerke**
**Hattenbergstrasse 10**
**D-6500 Mainz (DE)**

(84) Bennante Vertragsstaaten: **BE DE FR IT SE**

(73) Patentinhaber: **Carl-Zeiss-Stiftung trading as SCHOTT**
**GLASWERKE**
**Hattenbergstrasse 10**
**D-6500 Mainz 1 (DE)**

(84) Bennante Vertragsstaaten: **GB**

(72) Erfinder: **Claussen, Nils, Dr.**
**Forchenweg 24**
**D-7151 Leonberg 1 (DE)**
Erfinder: **Petzow, Günter, Prof. Dr.**
**Tannenweg 7**
**D-7022 Leinfelden-Echterdingen (DE)**
Erfinder: **Nieszery, Katharina**
**Schneidäckerstrasse 57**
**D-7000 Stuttgart 50 (DE)**
Erfinder: **Panhorst, Wolfgang**
**Lauterenstrasse 46**
**D-6500 Mainz (DE)**
Erfinder: **Weisskopf, Karl-Ludwig**
**Junoweg 3**
**D-7000 Stuttgart 80 (DE)**

(74) Vertreter: **Weickmann, Heinrich, Dipl.-Ing.**
**Patentanwälte Dipl.-Ing. H.Weickmann Dipl.-Phys.Dr.**
**K.Fincke Dipl.-Ing. F.A.Weickmann Dipl.-Chem. B.**
**Huber Dr.-Ing. H. Liska Dipl.-Phys.Dr. J. Prechtel**
**Postfach 860820**
**D-8000 München 86 (DE)**

**Beschreibung**

Die Erfindung betrifft einen feinkristallinen Cordierit enthaltenden keramischen Formkörper, ein Verfahren zu seiner Herstellung sowie seine Verwendung.

Cordierit ($2Al_2O_3 \cdot 2MgO \cdot 5SiO_2$) wird üblicherweise durch Kristallisation eines Glaskörpers mit der entsprechenden Nominalzusammensetzung oder durch Sintern glasiger (bei gleichzeitiger Kristallisation) bzw. vorkristallisierter (keramisierter) Pulver hergestellt. Die Festigkeit bzw. Zähigkeit (ca. <150 MPa bzw. <1,5 MPa√m) und der Elastizitätsmodul (E-Modul) (<100 GPa) derartiger Materialien ist allerdings gering. Aufgrund des niedrigen thermischen Ausdehnungskoeffizienten ($<1 \cdot 10^{-6}$/K), der niedrigen Dielektrizitätskonstanten und der geringen Wärmeleitfähigkeit würden sich aber Formkörper aus Cordierit gut als Dielektrikum, z. B. für Leitersubstrate, und als wärmedämmende Konstruktionselemente, z. B. für die Anwendung im temperaturbelasteten Bereich von Wärmekraftmaschinen, wie z. B. von konventionellen Kolbenmotoren, eignen.

Aufgabe der vorliegenden Erfindung ist deshalb die Bereitstellung eines Cordierit-Formkörpers, der neben guten dielektrischen und wärmedämmenden Eigenschaften auch gute mechanische Eigenschaften aufweist. Diese Aufgabe wird mit einem erfindungsgemäßen keramischen Formkörper gelöst.

Gegenstand der Erfindung ist ein keramischer, mehr als 50 Vol.-% feinkristallinen Cordierit enthaltender Formkörper, der erhältlich ist durch intensive Mahlung von vorkristallisiertem Cordierit-Pulver, Mischung des Pulvers mit zweiten Zusatzphasen höheren E-Moduls, Formung des Gemisches und Sinterung des erhaltenen Grünkörpers in einer durch ein Si-haltiges Pulverbett erzeugten Si-haltigen Atmosphäre bei Temperaturen zwischen 900 und 1400°C. Vorzugsweise liegen die Sintertemperaturen < 1280°C, und insbesondere zwischen 1000 und 1250°C.

Der E-Modul der Zusatzphasen mit höherem E-Modul liegt vorzugsweise <180 GPa. Die Zusatzphasen bestehen vorteilhafterweise aus $Si_3N_4$ und/oder SiC und/oder $ZrO_2$ und/oder $Al_2O_3$ und/oder MgO und/oder Mullit ($3 Al_2O_3 \cdot 2 SiO_2$) und/oder Zirkon ($ZrSiO_4$) und/oder $B_4C$, und liegen insbesondere in Form von Pulvern und/oder Whiskern vor; der Gehalt der Zusatzphasen in den erfindungsgemäßen keramischen Formkörpern liegt zweckmäßigerweise zwischen 1 und 50 Gew.-%, und insbesondere zwischen 5 und 30 Gew.-%. Als besonders vorteilhaft haben sich z. B. 5 bis 30 Gew.-% $Si_3N_4$, 5 bis 15 Gew.-% $ZrO_2$ und 1 bis 5 Gew.-% γ-$Al_2O_3$ als zweite Zusatzphasen erwiesen. In einer anderen zweckmäßigen Ausführungsform werden als zweite Zusatzphasen 1 bis 5, insbesondere 5 Gew.-% $Si_3N_4$-Pulver, 5 bis 10 Gew.-% $ZrO_2$-Pulver und 5 bis 40 Gew.-% $Si_3N_4$-Whisker oder 5 bis 40 Gew.-% SiC-Whisker zugesetzt.

Gegenstand der Erfindung ist auch ein Verfahren zur Herstellung der erfindungsgemäßen keramischen Formkörper, das dadurch gekennzeichnet ist, daß man vorkristallisiertes Cordierit-Pulver intensiv mahlt, das erhaltene Pulver mit zweiten Zusatzphasen höheren E-Moduls vermischt, das Gemisch formt und den erhaltenen Grünkörper in einer Si-haltigen Atmosphäre zwischen 900 und 1400°C sintert.

Vorzugsweise liegt die Sintertemperatur <1280°C, und liegt insbesondere zwischen 1000 und 1250°C.

Eine weitere zweckmäßige Ausgestaltung betrifft auch einen durch Kurzfasern (Whisker) verstärkten erfindungsgemäßen keramischen Formkörper nach einem der Ansprüche 8 bis 13, sowie ein Verfahren zu seiner Herstellung nach einem der Ansprüche 17 bis 23.

Die Si-haltige Sinteratmosphäre wird durch ein Si-haltiges Pulverbett erzeugt, in dem die Preßkörper dann gesintert werden; ein Si-haltiges Pulverbett ist insbesondere ein solches, das $Si_3N_4$- oder $SiO_2$-Pulver und/oder -whisker z. B. gemahlenen Quarz, enthält.

Die Vermischung, z. B. die Beimischung der $Si_3N_4$-Pulver oder -whisker, kann in einer dafür geeigneten üblichen Mischapparatur erfolgen, zweckmäßigerweise z. B. mittels eines Attritors mit $Al_2O_3$-Mahlmedien.

Durch Erniedrigung der Sintertemperatur, insbesondere <1280°C, in einer Si-haltigen Atmosphäre bei gleichzeitiger Dispersion von zweiten Phasen mit hohem E-Modul kann die Korngröße kleingehalten werden (<2 bis 5 μm). Dadurch wird ein erheblicher Gewinn an Festigkeit erzielt (bis zu 400 MPa Biegefestigkeit mit $K_{IC}$-Werten von >2,5 MPa √m). Werden $ZrO_2$-haltige Cordierit-Preßkörper zusammen mit SiAlON-Preßkörpern in einem $Si_3N_4$-haltigen Pulverbett (eingeschlossen in einem $Al_2O_3$-Tiegel) an Luft bei verschiedenen Temperaturen gesintert, so werden diese guten mechanischen Eigenschaften erhalten; gleichartige $ZrO_2$-haltige Cordierit-Preßkörper, die zuvor nur an Luft gesintert wurden, wiesen hingegen bei gleicher Sintertemperatur und Sinterzeit geringere Dichte und Festigkeitswerte auf. Auch die Biegebruchfestigkeit der erfindungsgemäßen Formkörper ist höher.

Die Tatsache, daß Zusätze von $Si_3N_4$-Pulver zu oxidischen Pulvern das Sinterverhalten verbessert, muß als in höchstem Maße überraschend angesehen werden, weil sie allen bisherigen Erfahrungen widerspricht. Üblicherweise gelten alle kovalent gebundene Keramiken als schlecht sinterfähig bzw. als sinterhemmende Zusätze. Umso überraschender war die gegenteilige Feststellung: Erfindungsgemäße Cordierit-Körper mit weiteren Zusätzen (immer zusammen mit mindestens 5 Gew.-% $Si_3N_4$) wie $Al_2O_3$, Zirkon, Mullit, SiC, $B_4C$ in Pulverform als auch in Form feiner $Si_3N_4$- und SiC-Whisker ließen sich, besonders im $Si_3N_4$-Pulverbett, bei relativ niederen Temperaturen, insbesondere <1280°C, bis zu >95 % der theoretischen Dichte sintern. Als Grund für die hohen Festigkeiten wird einerseits die feine Korngröße (oft <1 μm) des Cordierits und der dispergierten zweiten Phase als auch der erhöhte Gesamt-Elastizitätsmodul infolge der Zusätze ($Si_3N_4$ SiC, $Al_2O_3$, $ZrO_2$, Mullit, Zirkon, $B_4C$) angenommen. Der thermische Ausdehnungskoeffizient der erfindungsgemäßen Cordierit-Basis-Keramiken liegt zwar etwas höher als der des reinen Cordierit ($\sim3 - 6 \cdot 10^{-6}$/K), wird aber durch die höhere Festigkeit hinsichtlich einer Thermoschockbeanspruchung kompensiert.

Die Einbringung von Kurzfasern (Whiskern) mit kleinen Durchmessern (ca. 0,01 bis 10 µm) zur Verstärkung von Keramikkörpern stellt ein bisher noch nicht befriedigend gelöstes Problem dar. Dies liegt insbesondere daran, daß bei konventionellen pulvermetallurgischen Verfahren eine unregelmäßige Verteilung der Fasern (Whiskerbündelung) und eine statistische Orientierung der Whisker eintritt. Daneben ergeben sich aufgrund der relativ geringen Gründichten des keramischen Matrixpulvers während der Herstellung (z. B. Sintern) hohe Matrixzugspannungen bzw. eine hohe Restporosität in der Matrix, die sich ungünstig auswirken. Aus diesen Gründen hat man es zur Herstellung von faserverstärkten Keramiken bisher vorgezogen, kontinuierliche Fasern durch einen Pulverschlicker zu ziehen, aufzuwickeln, zu trocknen und anschließend heißzupressen. Dieses und ähnliche Verfahren haben jedoch den Nachteil, daß die Form des Keramikkörpers sehr einfach sein muß (bzw. nur eine Vorform darstellt). Die verwendeten Fasern besitzen gegenüber Whiskern außerdem einen größeren Durchmesser ($d \geq 5$ µm, $d_w$ oft <1 µm), einen kleineren E-Modul und viel geringere Festigkeiten; so besitzen z. B. SiC-Fasern (Durchmesser 10 µm) eine Festigkeit von 2000 MPa, SiC-Whisker mit einem Durchmesser von 0,4 µm hingegen eine Festigkeit von 20 000 MPa.

Eine zweckmäßige Ausgestaltung der vorliegenden Erfindung gemäß einem der Ansprüche 8 bis 13 betrifft mit Kurzfasern (Whiskern) verstärkte Keramikkörper, mit der sich die vorstehend genannten Nachteile und Schwierigkeiten vermeiden lassen, sowie ein Verfahren zu ihrer Herstellung nach einem der Ansprüche 17 bis 23.

Die Teilchen des im erfindungsgemäßen Verfahren eingesetzten keramischen Matrixpulvers und/oder die Whisker besitzen vorzugsweise einen Durchmesser von <1 µm; erfindungsgemäß arbeitet man vorzugsweise mit g-Werten (g = Erdbeschleunigung) von 10 bis $10^4$, also mit der 10 - bis $10^4$-fachen Erdbeschleunigung und insbesondere mit g = 10 - $10^3$. Das Volumenverhältnis von Whisker/Matrix liegt insbesondere zwischen 0,05 und 0,5; vorteilhafterweise werden als Whisker z. B. SiC-, $Si_3N_4$- und/oder $Al_2O_3$-Whisker verwendet, insbesondere mit mittleren Durchmessern von <1 µm und Längen/Durchmesser-Verhältnissen von >10.

Nach dem erfindungsgemäßen Verfahren wird aus dem Matrixpulver und feinen Whiskern auf an sich bekannte und geeignete Weise, z. B. durch Taumelmischen mit Plastikkugeln, ein für den Schlickerguß geeigneter Schlicker hergestellt, in dem die Whisker in der Regel eine gleiche oder etwas höhere Sedimentationsrate besitzen als das Matrixpulver.

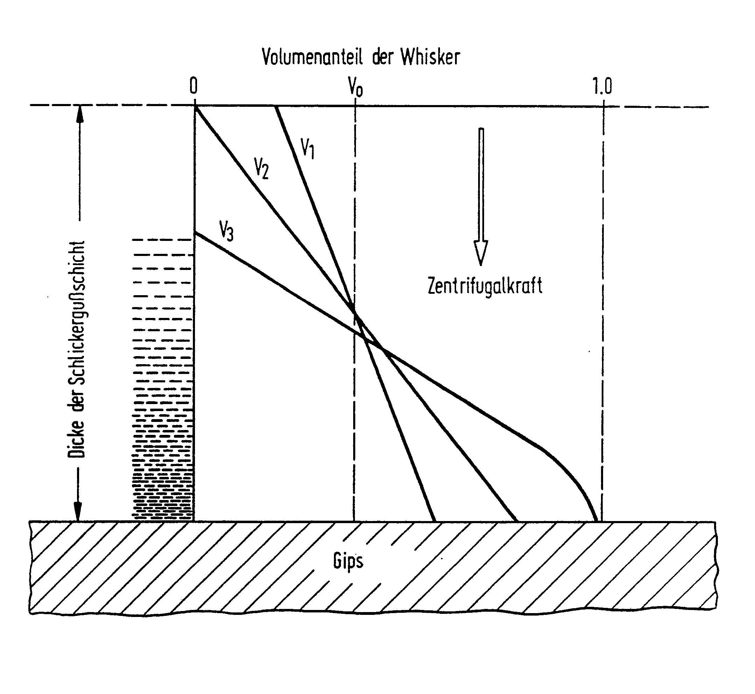

Die Fig. 1 zeigt schematisch die Konzentrationsprofile von Whiskern in einem über einer Gipsplatte befindlichen Schlickerguß. Wie die Figur zeigt, ergeben sich mit zunehmenden Unterschied in der Sedimentationsrate steiler werdende Konzentrationsprofile ($v_1$, $v_2$, $v_3$); beim Konzentrationsprofil $v_0$ = konstant ist die Schlickersedimentation des Pulvers und der Whisker identisch. Da jedoch in den meisten Fällen die zugbeanspruchte Zone von Konstruktionsteilen an der Oberfläche liegt, ist eine zur Oberfläche hin (d. h. also in der Figur zur Gipsseite hin) zunehmende Whiskerkonzentration von Vorteil. Eine Orientierung der Whisker senkrecht zur Oberfläche (Zugzone) ist jedoch mechanisch ungünstig und sollte durch eine Ausrichtung der Whisker parallel zur Zugrichtung ersetzt sein. Erfindungsgemäß wird nun durch Erhöhung der Beschleunigung (g = 1: Erdbeschleunigung) eine Ausrichtung der Whisker parallel zur Zugrichtung (wie in der Figur angedeutet) erzielt. Bei einer Laborzentrifuge mit einem Radius von 10 cm wird beispielsweise bei einer Drehzahl von 10 000 UpM eine Beschleunigung von ca. 10 000 g erzielt. Die erhöhte Beschleunigung bewirkt vermutlich, daß Reibkräfte zwischen den Whiskern beim Absinken bzw. beim Anlagern auf die Grundfläche weniger wirksam werden und daher eine Parallelorientierung besser gewährleistet wird. Die Zentrifugalkraft (d. h. die Umdrehungsgeschwindigkeit) sollte vorzugsweise so eingestellt werden, daß die Größentrennung der Matrixpulverteilchen in einem sinnvollen Rahmen bleibt, d. h. je kleiner die Teilchengrößenverteilung des Matrixpulvers ist, desto höhere g-Werte können angewandt werden.

Versuche mit Mischungen aus Whiskern, z. B. mit SiC- oder $Si_3N_4$-Whiskern, haben ergeben, daß bei hohen g-Werten, z. B. bei g = $10^4$, Whiskeragglomerate, grobe Whisker und Bruchstücke von Whiskermaterialteilen oder auch von Mahlwerkzeug, die als Verunreinigungen im Schlicker vorhanden sind, schon nach sehr kurzer Zeit (eine bis mehrere Minuten) vollständig an der unteren Seite, z. B. am Boden der Zentrifuge oder an der Grundfläche, wie z. B. der Gipsplatte in Fig. 1, angesammelt sind. Durch ein Abgießen (Abdekantieren) des verbleibenden Schlickers kann auf diese Weise eine für die weitere Verarbeitung zweckmäßige "Reinigung", d. h. Entfernung von unerwünschten Verunreinigungen und Clustern, die die Festigkeit des Keramikformkörpers vermindern können, erreicht werden.

Durch einen anschließenden Schlickerguß des auf diese Weise gereinigten Schlickers mit g $\geq 1$, bzw. bei g = 10 bis 100, kann eine fast vollständige zweidimensionale Ausrichtung alle Whisker erreicht werden. Es kann deshalb zweckmäßig sein, insbesondere auch zur Erzielung einer weitgehend vollständigen zweidimensionalen Ausrichtung der Whisker, den Schlicker vor dem Formgießen einer Behandlung mit hohen g-Werten, wie z. B. mit g = $10^4$, zu unterwerfen

Für eine effektive Whiskerverstärkung keramischer Werkstoffe ist es insbesondere zweckmäßig, mit Matrix/Whisker-Kombinationen zu arbeiten, bei denen die thermischen Ausdehnungskoeffizienten von Matrix und Whisker angepaßt sind, d. h. sich möglichst wenig unterscheiden, und/oder in denen die Whisker hohe Festigkeit und/oder hohe E-Module im Vergleich zum Matrixmaterial, insbesondere im Vergleich zum Cordierit-Matrixmaterial, aufweisen.

Mit der erfindungsgemäßen zweckmäßigen Ausgestaltung ist es also möglich, die mit den bisherigen Verfahren zur Herstellung von kurzfaserverstärkten Keramikformkörpern verbundenen Nachteile (insbesondere unregelmäßige Verteilung/statistische Anordnung der Whiskern, hohe Matrixzugspannungen und hohe Restporosität der Matrix infolge geringer Gründichten) zu vermeiden: Die wesentlichen Vorteile der erfindungsgemäßen Ausgestaltung gegenüber den bisher bekannten Methoden zur Einbringung von Whiskern (oder Kurzfasern, d. h. mit einem Faserlänge/Faserdurchmesser-Verhältnis >10) in keramische Werkstoffe sind insbesondere: zweidimensionale (flächenmäßige) Orientierung der Whisker, kontrolliert einstellbare Whiskerkonzentration (Volumenverhältnis) innerhalb des Formkörpers, wie z. B. eine erhöhte Konzentration im zugbeanspruchten Bereich des Verbundformkörpers; hohe Gründichte des Matrixpulvers zwischen den Whiskern.

Aufgrund der guten mechanischen Eigenschaften in Verbindung mit den hervorragenden elektrischen und thermischen Eigenschaften eignen sich die erfindungsgemäßen keramischen Formkörper deshalb sehr gut als Dielektrikum, z. B. als Substrat für elektrische Leiterbahnen, und/oder als wärmedämmendes Konstruktionselement, insbesondere für Wärmekraftmaschinen. Gegenstand der Erfindung ist deshalb auch die Verwendung der erfindungsgemäßen keramischen Formkörper als Dielektrikum, insbesondere als Substrat für elektrische Leiterbahnen und/oder als wärmedämmendes Konstruktionselement, insbesondere für Wärmekraftmaschinen, wie z. B. für konventionelle Kolbenmotoren.

Aufgrund der Verfahrensmaßnahmen und Eigenschaften der nach der zweckmäßigen Ausgestaltung erhaltenen kurzfaserverstärkten Formkörper eignen sich diese Formkörper insbesondere auch als rotationssymmetrische Verbundformkörper und Motorkeramiken, wie z. B. für Turbinenrotoren, Turbinenstatoren, Zylinder, Scheiben usw.

Die nachfolgenden Beispiele erläutern die Erfindung näher, ohne sie darauf zu beschränken. Wenn nicht anders angegeben, beziehen sich Temperaturangaben auf Celsius-Grade und Prozentangaben auf Gewichtsprozente.

## Beispiele

### Beispiel 1

100 g keramisiertes, 15 Gew.-% $ZrO_2$-haltiges Cordierit-Pulver wurde jeweils mit 1, 15, 25 und 35 Gew.-% $Si_3N_4$-Pulver in Wasser 6 Std. in einer Attritormühle mit 85 % $Al_2O_3$-Mahlkugeln gemahlen, getrocknet und bei 630 MPa kaltisostatisch gepreßt. Die Preßkörper wurden bei Temperaturen zwischen 950°C und 1340°C in einem $Si_3N_4$-Pulverbett an Luft 2 Stunden gesintert. Proben mit 25 Gew.-% $Si_3N_4$, die bei 1280°C gesintert waren, wiesen eine maximale Biegefestigkeit (4-Punkt, 28/9 mm von 380 MPa auf. Der Vickerseindruck-$K_{IC}$ (ICL) betrug ~3 MPa√m. Die mittlere Cordieritkorn- und $Si_3N_4$-Teilchengröße lag bei ~1 µm.

### Beispiel 2

100 g Cordieritpulver wurde jeweils mit 15 Gew.-% SiC, 15 Gew.-% γ-$Al_2O_3$ und 15 Gew.-% Mullit, wie in Beispiel 1 behandelt, und 2 Stunden bei 1250°C gesintert. Die Biegefestigkeiten lagen bei allen Proben zwischen 220 und 310 MPa gegenüber 150 MPa bei reinem, nur attritiertem und an Luft (nicht im $Si_3N_4$-Pulverbett) gesinterten Cordierit.

### Beispiel 3

100 g Cordieritpulver und 5 Gew.-% Si M -Pulver wurden wie in Beispiel 1 attritiert. Der hieraus resultierende Schlicker wurde anschließend mit 30 Gew.-% $Si_3N_4$-Whiskern (Durchmesser ca. 0,3 µm) versetzt und 25 Stunden lang zusammen mit Plastikkugeln (2 bis 4 mm Durchmesser) in einem Trommelmischer geschüttelt. Dieser Schlicker, der außerdem 1 Gew.-% eines sterischen Dispergierungsmittels (Balapix) enthielt, wurde anschließend auf eine Gipsfläche gegossen und getrocknet.

Nach einer zweistündigen Sinterung der ca. 1 mm dicken Plättchen bei 1280°C wie in Beispiel 1 beschrieben betrug die maximale Biegefestigkeit 390 MPa, die Dichte betrug 92 % TD.

### Beispiel 4

100 g einer Mischung aus 50 Gew.-% Cordierit (= 64 Vol.-%), 30 Gew.-% 3 Mol%-$Y_2O_3$-haltiges $ZrO_2$ (= 16 Vol.-%) (3Y-TZP) und 20 Gew.-% $Si_3N_4$-Whisker (= 20 Vol.-%) (SNW 1, Tateho Chem.) wurde in Propanol 25 Stunden mit Plastikkugeln in einem Trommelmischer vermischt. Die Mischungsverhältnisse haben zur Folge, daß die Cordierit-$ZrO_2$-Matrix denselben mittleren thermischen Ausdehnungskoeffizienten besitzt wie die $Si_3N_4$-Whisker ($\alpha = 2,5 \cdot 10^{-6}$/K). (Das Cordierit und Y-TZP wurden zuvor in einem Attritor 6 Stunden gemahlen.) Der Schlicker wurde anschließend in einer Zentrifuge mit 10 000 UpM auf eine Gipsunterlage druckgegossen. Die getrockneten Plättchen wurden anschließend bei Temperaturen zwischen 950°C und 1340°C in einem $Si_3N_4$-Pulverbett an Luft 2 Stunden gesintert. Die Biegefestigkeit betrug 450 MPa, wenn die Proben so geprüft wurden, daß die zugbeanspruchte Seite identisch mit der der Gipsplatte zugewandten Seite war. Aus metallographischen Untersuchungen ergab sich, daß die $Si_3N_4$-Whisker sowohl eine zur Gipsplatte hin zunehmende Konzentration (infolge schnellerer Sedimentation) als auch eine zweidimensionale, d.h. parallel zur Zugrichtung vorliegende Orientierung besaßen (vgl. Fig. 1).

## Beispiel 5

100 g einer Zusammensetzung aus 45 Vol.-% Cordierit, 35 Vol.-% unstabilisiertes $ZrO_2$ und 20 Vol.-% SiC-Whisker (SCW 1, Tateho Chem., Durchmesser 0,05 - 0,2 µm) wurden wie folgt gemischt: Zunächst wurde Cordierit mit $ZrO_2$ 6 Stunden in Propanol attritiert, anschließend wurde dem Schlicker die SiC-Whisker zugesetzt und 24 Stunden mit Plastikkugeln vermischt. Der Schlicker wurde in einem Rotovap-Trockner (Fa. Büchi) getrocknet. Daraus wurden Proben bei 630 MPa isostatisch gepreßt und wie im Beispiel 1 bei 1400°C 2 Stunden gesintert. Die Biegefestigkeit betrug bei Raumtemperatur 380 MPa; bei Proben, die anschließend heißisostatisch bei 1350°C 10 Minuten nachverdichtet wurden, stieg die Biegefestigkeit auf 520 MPa. Auch bei 1000°C betrug die Festigkeit noch 350 MPa.

## Beispiel 6

Der nach Beispiel 6 hergestellte Schlicker wurde mit 1 Gew.-% eines Dispersionsmittels (Dolapix) versetzt und wie in Beispiel 5 unter hohen Zentrifugalkräften schlickergegossen. Nach einer Sinterung wie in Beispiel 1 und anschließender metallographischer Untersuchung zeigte sich ebenfalls eine zweidimensionale (schichtförmige) Ausrichtung der Whisker, wobei die Konzentration der Whisker zur Oberfläche hin (die beim Schlickerguß an der Gipsfläche auflag) erheblich zunahm.

## Patentansprüche

1. Keramischer, mehr als 50 Vol.-% feinkristallinen Cordierit enthaltender Formkörper, erhältlich durch intensive Mahlung von vorkristallisiertem Cordierit-Pulver, Mischung des Pulvers mit zweiten Zusatzphasen höheren Elastizitätsmoduls, Formung des Gemisches und Sinterung des erhaltenen Grünkörpers in einer durch ein Si-haltiges Pulverbett erzeugten Si-haltigen Atmosphäre bei Temperaturen zwischen 900 und 1400°C.

2. Formkörper nach Anspruch 1, dadurch *gekennzeichnet*, daß die zweiten Zusatzphasen mit höherem E-Modul solche mit einem E-Modul >180 GPa sind.

3. Formkörper nach einem der vorhergehenden Ansprüche, dadurch *gekennzeichnet*, daß die Zusatzphasen mit höherem E-Modul aus $Si_3N_4$ und/oder SiC und/oder $ZrO_2$ und/oder $Al_2O_3$ und/oder MgO und/oder Mullit ($3Al_2O_3·2SiO_2$) und/oder Zirkon ($ZrSiO_4$) und/oder $B_4C$ bestehen.

4. Formkörper nach einem der vorhergehenden Ansprüche, dadurch *gekennzeichnet*, daß die Zusatzphasen mit höherem E-Modul in Form von Pulvern und/oder Whiskern vorliegen.

5. Formkörper nach einem der vorhergehenden Ansprüche, dadurch *gekennzeichnet*, daß die Zusatzphasen in einer Menge von 1 bis 50 Gew.-% vorliegen.

6. Formkörper nach einem der vorhergehenden Ansprüche, dadurch *gekennzeichnet*, daß er als Zusatzphasen 5 bis 30 Gew.-% $Si_3N_4$, 5 bis 15 Gew.-% $ZrO_2$ und 1 bis 5 Gew.-% $\gamma$-$Al_2O_3$ enthält.

7. Formkörper nach einem der vorhergehenden Ansprüche, dadurch *gekennzeichnet*, daß er als Zusatzphasen 1 bis 5 Gew.-% $Si_3N_4$-Pulver, 5 bis 10 Gew.-% $ZrO_2$-Pulver und 5 bis 40 Gew.-% $Si_3N_4$-Whisker oder 5 bis 40 Gew.-% SiC-Whisker enthält.

8. Formkörper nach einem der Ansprüche 1 bis 7, dadurch *gekennzeichnet*, daß er durch Kurzfasern verstärkt ist und man zur Formung des Gemisches den aus dem keramischen Matrixpulver und den Whiskern gebildeten feinen homogenen Schlicker mit einer Beschleunigung $g \geq 1$ in eine Form gießt, anschließend trocknet und danach sintert und heißisostatisch nachverdichtet, oder ohne Sinterung direkt heißisostatisch verdichtet.

9. Formkörper nach Anspruch 8, dadurch *gekennzeichnet*, daß die Teilchen des keramischen Matrixpulvers und die Whisker einen Durchmesser <1 µm besitzen.

10. Formkörper nach Anspruch 8 oder 9, dadurch *gekennzeichnet*, daß die g-Werte 10 bis $10^4$, insbesondere 10 bis $10^3$, betragen.

11. Formkörper nach einem der Ansprüche 8 bis 10, dadurch *gekennzeichnet*, daß das Volumenverhältnis Whisker/Matrix zwischen 0,05 und 0,5 liegt.

12. Formkörper nach einem der Ansprüche 8 bis 11, dadurch *gekennzeichnet*, daß man als Whisker SiC-, $Si_3N_4$- und/oder $Al_2O_3$-Whisker mit mittleren Durchmessern <1 µm und Längen/Durchmesser-Verhältnissen von >10 verwendet.

9

13. Formkörper nach einem der Ansprüche 8 bis 12, dadurch *gekennzeichnet*, daß man Matrix/Whisker-Kombinationen verwendet, bei denen die thermischen Ausdehnungskoeffizienten von Matrix und Whisker angepaßt sind und in denen die Whisker hohe Festigkeiten und/oder hohe E-Module im Vergleich zum Matrixmaterial aufweisen.

14. Verfahren zur Herstellung eines keramischen Formkörpers nach einem der Ansprüche 1 bis 7, dadurch *gekennzeichnet*, daß man vorkristallisiertes Cordierit-Pulver intensiv mahlt, das erhaltene Pulver mit zweiten Zusatzphasen höheren E-Moduls vermischt, das Gemisch formt und den erhaltenen Grünkörper in einer durch ein Si-haltiges Pulverbett erzeugten Si-haltigen Atmosphäre zwischen 900 und 1400°C sintert.

15. Verfahren nach Anspruch 14, dadurch *gekennzeichnet*, daß die Si-haltige Sinteratmosphäre durch ein Si₃N₄-haltiges Pulverbett erzeugt wird, in dem die Preßkörper gesintert werden.

16. Verfahren nach Anspruch 14, dadurch *gekennzeichnet*, daß die Si-haltige Sinteratmosphäre durch ein SiO₂-haltiges Pulverbett erzeugt wird, in dem die Preßkörper gesintert werden.

17. Verfahren nach einem der Ansprüche 14 bis 16, dadurch *gekennzeichnet*, daß ein durch Whisker verstärkter Formkörper hergestellt wird, indem man den aus Matrixpulver aus Cordierit und zweiter Zusatzphase höheren E-Moduls und den Whiskern gebildeten feinen homogenen Schlicker mit einer Beschleunigung g ≳ 1 in eine Form gießt, anschließend trocknet und danach sintert und heißisostatisch nachverdichtet, oder ohne Sinterung direkt heißisostatisch verdichtet.

18. Verfahren nach Anspruch 17, dadurch *gekennzeichnet*, daß die Teilchen des keramischen Matrixpulvers und die Whisker einen Durchmesser <1μm besitzen.

19. Verfahren nach Anspruch 17 oder 18, dadurch *gekennzeichnet*, daß die g-Werte 10 bis $10^4$, insbesondere 10 bis $10^3$, betragen.

20. Verfahren nach einem der Ansprüche 17 bis 19, dadurch *gekennzeichnet*, daß das Volumenverhältnis Whisker/Matrix zwischen 0,05 und 0,5 liegt.

21. Verfahren nach einem der Ansprüche 17 - 20, dadurch *gekennzeichnet*, daß man als Whisker SiC-, Si₃N₄- und/oder Al₂O₃-Whisker mit mittleren Durchmessern <1μm und Längen/Durchmesser-Verhältnissen von >10 verwendet.

22. Verfahren nach einem der Ansprüche 17 - 21, dadurch *gekennzeichnet*, daß man Matrix/Whisker-Kombinationen verwendet, bei denen die thermischen Ausdehnungskoeffizienten von Matrix und Whisker angepaßt sind und in denen

10

die Whisker hohe Festigkeiten und/oder hohe E-Module im Vergleich zum Matrixmaterial aufweisen.

23. Verfahren nach einem der Ansprüche 17 - 22, dadurch *gekennzeichnet*, daß man rotationssymmetrische Keramikformkörper, wie z. B. Turbinenrotoren, Turbinenstatoren, Zylinder oder Scheiben herstellt.

24. Verwendung cer keramischen Formkörper nach einem der Ansprüche 1 bis 13 als Dielektrikum, insbesondere als Substrat für elektrische Leiterbahnen.

25. Verwendung der keramischen Formkörper nach einem der Ansprüche 1 bis 13 als wärmedämmende Konstruktionselemente, insbesondere für Wärmekraftmaschinen.

**Claims**

1. Ceramic formed body containing more than 50 vol.-% of finely crystalline cordierite, obtained by intensive grinding of pre-crystallised cordierite powder, mixing of the powder with second additional phases of higher elasticity module, forming of the mixture and sintering of the green body obtained in an Si-containing atmosphere, produced by an Si-containing powder bed, at temperatures between 900 and 1400°C.

2. Formed body according to claim 1, characterised in that the second additional phases with higher E-module are those with an E module of > 180 GPa.

3. Formed body according to one of the preceding claims, characterised in that the additional phases with higher E-module consist of Si₃N₄, and/or SiC and/or ZrO₂ and/or Al₂O₃ and/or MgO and/or mullite (3Al₂O₃·2SiO₂) and/or zircon (ZrSiO₄) and/or B₄C.

4. Formed body according to one of the preceding claims, characterised in that additional phases with higher E-module are present in the form of powders and/or whiskers.

5. Formed body according to one of the preceding claims, characterised in that the additional phases are present in an amount of 1 to 50 wt.-%.

6. Formed body according to one of the preceding claims, characterised in that, as additional phases, it contains 5 to 30 wt.-% Si₃N₄, 5 to 15 wt.-% ZrO₂ and 1 to 5 wt.-% γ-Al₂O₃.

7. Formed body according to one of the preceding claims, characterised in that, as additional phases, it contains 1 to 5 wt.-% Si₃N₄, powder, 5 to 10 wt.-% ZrO₂ powder and 5 to 40 wt.-% Si₃N₄ whiskers or 5 to 40 wt.-% SiC whiskers.

11

8. Formed body according to one of claims 1 to 7, characterised in that it is reinforced with short fibres and, for the forming of the mixture, one casts into a mould the finely homogeneous slip formed from the ceramic matrix powder and the whiskers with an acceleration of $g \geq 1$, subsequently dries and thereafter sinters and hot-isostatically post-consolidates or directly hot isostatically consolidates without sintering.

9. Formed body according to claim 8, characterised in that the particles of the ceramic matrix powder and the whiskers possess a diameter of $< 1 \mu m$.

10. Formed body according to claim 8 or 9, characterised in that the g values amount to 10 to $10^4$, especially to 10 to $10^3$.

11. Formed body according to one of claims 8 to 10, characterised in that the volume ratio of whisker/matrix lies between 0.05 and 0.5.

12. Formed body according to one of claims 8 to 11, characterised in that, as whiskers, one uses SiC, $Si_3N_4$ and/or $Al_2O_3$ whiskers with average diameters of $< 1 \mu m$. and length/diameter ratios of $> 10$.

13. Formed body according to one of claims 8 to 12, characterised in that one uses matrix/whisker combinations in which the thermal coefficients of expansion of matrix and whisker are matched and in which the whiskers display high strengths and/or high E-modules in comparison with the matrix material.

14. Process for the production of a ceramic formed body according to one of claims 1 to 7, characterised in that one intensively grinds pre-crystallised cordierite powder, mixes the powder obtained with second additional phases of higher E-module, forms the mixture and sinters the green body obtained in an Si-containing atmosphere, produced by an Si-containing powder bed, between 900 and 1400°C.

15. Process according to claim 14, characterised in that the Si-containing sinter atmosphere is produced by an $Si_3N_4$-containing powder bed in which the pressed bodies are sintered.

16. Process according to claim 14, characterised in that the Si-containing sinter atmosphere is produced by an $SiO_2$-containing powder bed in which the pressed bodies are sintered.

17. Process according to one of claims 14 to 16, characterised in that a formed body reinforced by whiskers is produced in that one casts into a mould with an acceleration of $g \geq 1$ the finely homogeneous slip produced from matrix powder of cordierite and second additional phase of higher E-module and the whiskers, subsequently dries and thereafter sinters and hot isostatically post-

12

consolidates or directly hot isostatically consolidates without sintering.

18. Process according to claim 17, characterised in that the particles of the ceramic matrix powder and the whiskers possess a diameter of $< 1 \mu m$.

19. Process according to claim 17 or 18, characterised in that the g value amounts to 10 to $10^4$, especially to 10 to $10^3$.

20. Process according to one of claims 17 to 19, characterised in that the volume ratio of whiskers/matrix lies between 0.05 and 0.5.

21. Process according to one of claims 17 - 20, characterised in that, as whiskers, one uses SiC, $Si_3N_4$ and/or $Al_2O_3$ whiskers with average diameters of $<1 \mu m$. and length/diameter ratios of $> 10$.

22. Process according to one of claims 17 - 21, characterised in that one uses matrix/whisker combinations in which the thermal coefficients of expansion of matrix and whiskers are matched and in which the whiskers have high strengths and/or high E-modules in comparison with the matrix material.

23. Process according to one of claims 17 - 22, characterised in that one produces rotation-symmetrical ceramic formed bodies, such as e.g. turbine rotors, turbine stators, cylinders or discs.

24. Use of the ceramic formed bodies according to one of claims 1 to 13 as dielectric, especially as substrate for electric strip conductors.

25. Use of the ceramic formed bodies according to one of claims 1 to 13 as heat-insulating constructional elements, especially for heat engines.

**Revendications**

1. Corps moulé en céramique contenant plus de 50 % en volume de cordiérite à cristaux fins, susceptible d'être obtenu par broyage intensif de poudre de cordiérite précristallisée, mélange de la poudre avec des deuxièmes phases supplémentaires à module d'élasticité plus élevée, mise en forme du mélange et frittage du corps cru obtenu dans une atmosphère contenant du silicium produite par un lit de poudre contenant du silicium à des températures situées entre 900 et 1400°C.

2. Corps moulé selon la revendication 1, caractérisé en ce que les deuxièmes phases supplémentaires à module d'élasticité plus élevé sont celles ayant un module d'élasticité $> 180$ GPa.

3. Corps moulé selon l'une des revendications précédentes, caractérisé en ce que les phases supplémentaires à module d'élasticité plus élevé consistent en du $Si_3N_4$ et/ou du SiC et/ou du

consistent en du $Si_3N_4$ et/ou du SiC et/ou du $ZrO_2$ et/ou du $Al_2O_3$ et/ou du MgO et/ou de la mullite ($3Al_2O_3 \cdot 2SiO_2$) et/ou de la zircone ($ZrSiO_4$) et/ou du $B_4C$.

4. Corps moulé selon l'une des revendications précédentes, caractérisé en ce que les phases supplémentaires ayant un module d'élasticité plus élevé se présentent sous forme de poudres et/ou de whiskers.

5. Corps moulé selon l'une des revendications précédentes, caractérisé en ce que les phases supplémentaires sont présentes en une quantité de 1 à 50% en poids.

6. Corps moulé selon l'une des revendications précédentes, caractérisé en ce qu'il contient en tant que phases supplémentaires 5 à 30 % en poids de $Si_3N_4$, 5 à 15 % en poids de $ZrO_2$ et 1 à 5% en poids de $\gamma$-$Al_2O_3$.

7. Corps moulé selon l'une des revendications précédentes, caractérisé en ce qu'il contient en tant que phases supplémentaires 1 à 5 % en poids de poudre de $Si_3N_4$, 5 à 10 % en poids de poudre de $ZrO_2$ et 5 à 40 % en poids de whiskers de $Si_3N_4$ ou de 5 à 40 % en poids de whiskers de SiC.

8. Corps moulé selon l'une des revendications 1 à 7, caractérisé en ce qu'il est renforcé par des fibres courtes et que, pour la mise en forme du mélange, on verse dans un moule la barbotine homogène fine formée par la poudre de matrice céramique et les whiskers sous une accélération de g $\geq$ 1, qu'on la sèche ensuite, puis l'agglomère par frittage et qu'on la recomprime isostatiquement à chaud ou qu'on la comprime sans frittage directement isostatiquement à chaud.

9. Corps moulé selon la revendication 8, caractérisé en ce que les particules de la poudre de matrice en céramique et les whiskers présentent un diamètre <1 $\mu$m.

10. Corps moulé selon la revendication 8 ou 9, caractérisé en ce que les valeurs g sont de 10 à $10^4$; , notamment de 10 à $10^3$.

11. Corps moulé selon l'une des revendications 8 à 10, caractérisé en ce que le rapport volumique whiskers/matrice se situe entre 0,05 et 0,5.

12. Corps moulé selon l'une des revendications 8 à 11, caractérisé en ce que l'on utilise en tant que whiskers, des whiskers de SiC-, de $Si_3N_4$- et/ou d'$Al_2O_3$ ayant des diamètres moyens <1 $\mu$m et des rapports longueurs/diamètres >10.

13. Corps moulé selon l'une des revendications 8 à 12, caractérisé en ce que l'on utilise des combinaisons matrice/whiskers, dans lesquelles les coefficients de dilatation thermique de la matrice et des whiskers sont ajustés et dans lesquelles les whiskers présentent des résistances élevées et/ou des modules d'élasticité élevés par rapport au matériau de la matrice.

14. Procédé pour la préparation d'un corps moulé en céramique selon l'une des revendications 1 à 7, caractérisé en ce que l'on broie intensivement de la poudre de cordiérite précristallisée, que l'on mélange la poudre obtenue avec des deuxièmes phases supplémentaires à module d'élasticité plus élevé, que l'on met en forme le mélange et que l'on agglomère par frittage le corps cru obtenu dans une atmosphère contenant du silicium produite par un lit de poudre contenant du silicium à une température entre 900 et 1400°C.

15. Procédé selon la revendication 14, caractérisé en ce que l'atmosphère de frittage contenant du silicium est produite par un lit de poudre contenant du $Si_3N_4$, dans lequel on agglomère par frittage les corps pressés.

16. Procédé selon la revendication 14, caractérisé en ce que l'atmosphère de frittage contenant du silicium est produite par un lit de poudre contenant du $SiO_2$ dans lequel on agglomère par frittage les corps pressés.

17. Procédé selon l'une des revendications 14 à 16, caractérisé en ce que l'on produit un corps moulé renforcé par des whiskers, en versant dans un moule la barbotine homogène fine formée à partir de la poudre de matrice de cordiérite, de la deuxième phase supplémentaire à module d'élasticité plus élevé et des whiskers sous une accélération de g $\geq$ 1, en la séchant ensuite, puis en l'agglomérant par frittage et en la comprimant davantage isostatiquement à chaud, ou en la comprimant directement isostatiquement à chaud sans fritage.

18. Procédé selon la revendication 17, caractérisé en ce que les particules de la poudre de matrice en céramique et les whiskers possèdent un diamètre de <1 $\mu$m.

19. Procédé selon la revendication 17 ou 18, caractérisé en ce que les valeurs de g sont de 10 à $10^4$, notamment de 10 à $10^3$.

20. Procédé selon l'une des revendications 17 à 19, caractérisé en ce que le rapport volumique whiskers/matrice se situe entre 0,05 et 0,5.

21. Procédé selon l'une des revendications 17 - 20, caractérisé en ce que l'on utilise en tant que whiskers des whiskers de SiC-, $Si_3N_4$- et/ou d'$Al_2O_3$ ayant des diamètres moyens <1 $\mu$m et des rapports longueurs/diamètres >10.

22. Procédé selon l'une des revendications 17 - 21, caractérisé en ce que l'on utilise des combinaisons matrice/whiskers, dans lesquelles les et des whiskers sont ajustés et dans lesquelles les whiskers présentent des résistances élevées et/ou des modules d'élasticité élevés par rapport à la matière de la matrice.

23. Procédé selon l'une quelconque des revendications 17 - 22, caractérisé en ce que l'on produit des corps moulés en céramique symétriques en rotation, comme par exemple des rotors de turbine, des stators de turbine, des cylindres ou des disques.

24. Utilisation des corps moulés en céramique selon l'une des revendications 1 à 15, en tant que diélectriques, notamment comme substrats pour des pistes conductrices électriques.

25. Utilisation des corps moulés en céramique selon l'une des revendications 1 à 13 en tant qu'éléments de construction thermoisolants, notamment pour des moteurs thermiques.

Volumenanteil der Whisker

0       $V_0$       1.0

$V_1$

$V_2$

$V_3$

Zentrifugalkraft

Dicke der Schlickergußschicht

Gips